# EUROPEAN PATENT APPLICATION

(11) **EP 3 498 445 A1**
(43) Date of publication of application: **19.06.2019**
(21) Application number: 17839522.4
(22) Date of filing: 09.08.2017
(51) Int. Cl.: B29B 9/12, B29B 13/06, C08K 3/26, C08L 23/06, C08L 23/12, B29K 23/00

(54) **METHOD FOR MANUFACTURING RESIN MOLDED BODY, METHOD FOR MANUFACTURING RESIN MOLDING PELLET, AND METHOD FOR IMPROVING SMOOTHNESS**

(30) Priority: 12.08.2016 JP 2016158897
(71) Applicant: TBM Co., Ltd., Chuo-ku, Tokyo 104-0061 (JP)
(72) Inventor: KUROKI, Shigeki, Tokyo 104-0061 (JP)
(74) Representative: Papula Oy
(86) International application number: PCT/JP2017/028885
(87) International publication number: WO 2018/030454

(57) **Abstract**

The present invention provides a method for producing a resin molded product having good surface smoothness. An object of the present invention is to provide a method for producing pellets for resin molding. Another object of the present invention is to provide a method for improving the smoothness of the surface of the resin molded product. The method for producing a resin molded product according to the present invention is a method including: a molding step of molding pellets of a resin composition including a thermoplastic resin and inorganic particles, in which a content of water contained in the pellets is 0.55% by mass or lower relative to the mass of the inorganic particles included in the pellets; and the content of the inorganic particles included in the resin composition is 30% by mass or higher relative to the total amount of the resin composition.

## Description

### Field

The present invention relates to a method for producing a resin molded product, a method for producing pellets for resin molding, and a method for improving smoothness.

### Background

Conventionally, as a method for producing a resin molded product, a method for pelletizing a resin composition so as to facilitate processing and thereafter molding the molded product is frequently employed.

For example, Patent Literature 1 has disclosed a method for producing a resin molded product including the step of extruding pellets containing a thermoplastic resin and 60% by weight to 82% by weight of inorganic particles with a T-die to mold the pellets into a sheet-like product.

### Citation List

### Patent Literature

Patent Literature 1: Japanese Patent Application Laid-open No. 2013-10931

### Summary

### Technical Problem

However, molding the pellets of a resin composition including a large amount of inorganic particles as described above causes a problem in that the smoothness of the surface tends to be lost.

The present invention has been made in view of the above circumstances and an object of the present invention is to provide a method for producing a resin molded product having excellent surface smoothness. An object of the present invention is to provide a method for producing pellets for resin molding. An object of the present invention is to provide a method for improving the smoothness of the surface of a resin molded product.

### Solution to Problem

The inventors of the present invention have found that the surface of the resin molded product tends to be smooth by reducing the content of water contained in the pellets despite including a large amount of inorganic particles in the pellets, and have completed the present invention. More specifically, the objects of the present invention are to provide the followings.
(1) A method for producing a resin molded product, the method including:
   a molding step of molding pellets of a resin composition including a thermoplastic resin and inorganic particles,
   in which a content of water contained in the pellets is 0.55% by mass or lower relative to the mass of the inorganic particles included in the pellets; and
   a content of the inorganic particles included in the resin composition is 30% by mass or higher relative to the total amount of the resin composition.
(2) The method for producing the resin molded product according to (1), in which the thermoplastic resin includes a polyolefin resin.
(3) The method for producing the resin molded product according to (2), in which the polyolefin resin includes polypropylene or polyethylene.
(4) The method for producing the resin molded product according to any one of (1) to (3), in which the inorganic particles include calcium carbonate particles.
(5) The method for producing the resin molded product according to any one of (1) to (4), in which a content of water contained in the pellets immediately before molding in the molding step is 0.55% by mass or lower relative to the mass of the inorganic particles included in the pellets.
(6) A method for producing pellets for resin molding, the method including:
   a step of preparing pellets of a resin composition including a thermoplastic resin and inorganic particles; and
   a step of controlling a content of water contained in the pellets to 0.55% by mass or lower relative to the mass of the inorganic particles included in the pellets,
   in which a content of the inorganic particles included in the resin composition is 30% by mass or higher relative to the total amount of the resin composition.
(7) A method for improving smoothness of a surface of a resin molded product, the method including:
   a step of controlling a content of water contained in the pellets of a resin composition including a thermoplastic resin and inorganic particles to 0.55% by mass or lower relative to the mass of the inorganic particles; and
   a step of molding the pellets after the controlling.

### Advantageous Effects of Invention

According to the present invention, a resin molded product having excellent surface smoothness can be obtained.

### Description of Embodiments

Hereinafter, the embodiments of the present invention will be described. The present invention, however, is not particularly limited thereto.

### <Method for producing resin molded product>

The present invention provides a method for producing a resin molded product, the method including: a molding step of molding pellets of a resin composition including a thermoplastic resin and inorganic particles, in which a content of water contained in the pellets is 0.55% by mass or lower relative to the mass of the inorganic particles included in the pellets; and a content of the inorganic particles included in the resin composition is 30% by mass or higher relative to the total amount of the resin composition.

In the case where pellets are molded in a state including the inorganic particles in the pellets, it is considered that the pellets including a large amount of the inorganic particles are molded while the water contained in the inorganic particles is evaporated and thus the surface smoothness of the obtained molded product is lost. On the other hand, it is assumed that, according to the present invention, water evaporation during molding is difficult to occur by setting the content of water in the pellets to 0.55% by mass or lower relative to the mass of the inorganic particles included in the pellets and, as a result, the resin molded product having surface smoothness can be obtained.

### (Molding step)

The molding step in the present invention is a molding step for molding pellets of a resin composition including a thermoplastic resin and inorganic particles. In addition, the molding step includes that a content of water contained in the pellets is 0.55% by mass or lower relative to the mass of the inorganic particles included in the pellets, and a content of the inorganic particles included in the resin composition is 30% by mass or higher relative to the total amount of the resin composition.

The pellets in the present invention are constituted of the resin composition including the thermoplastic resin and the inorganic particles. The content of water contained in the pellets is not particularly limited as long as the content of water is 0.55% by mass or lower relative to the mass of the inorganic particles included in the pellets. From the viewpoint of obtaining more excellent smoothness, the content of water is preferably 0.52% by mass or lower, more preferably 0.50% by mass or lower, further preferably 0.48% by mass or lower, further more preferably 0.45% by mass or lower, especially preferably 0.42% by mass or lower, and particularly preferably 0.37% by mass or lower. The pellets containing no water are particularly preferable. The content of water contained in the pellets may be 0.01% by mass or higher relative to the mass of the inorganic particles included in the pellets. In particular, the content of water in the inorganic particles within the above range is preferably immediately before molding (for example, immediately before the pellets are charged into a molding machine).

The content of water in the inorganic particles in the pellets is measured with an infrared moisture meter (FD-660, Kett Electric Laboratory) under an atmosphere at a humidity of 50% and a temperature of 23°C.

With respect to the content of the inorganic particles in the pellets, thermal gravity-differential thermal analysis (TG-DTA) is carried out up to 800°C to determine percent by mass of the inorganic particles from the weight loss.

The thermoplastic resin included in the resin composition constituting the pellets is not particularly limited and examples of the thermoplastic resin include a polyolefin resin, a vinyl resin, a polyester resin, a polycarbonate resin, and a polyamide resin. Of these thermoplastic resins, the polyolefin resin is preferable because excellent smoothness can be obtained by the effect according to the present invention even though smoothness tends to be lost when the inorganic particles are included. As the polyolefin resin, polypropylene and polyethylene are particularly preferable. The thermoplastic resin may be a thermoplastic resin already subjected to stretching or the like, or an edge material (for example, a trimmed part) generated during extrusion of the resin or the like may be used.

The content of the thermoplastic resin included in the resin composition constituting the pellets may be appropriately set depending on the amounts of the inorganic particles and other components. The content of the thermoplastic resin is preferably lower than 60% by mass, more preferably lower than 50% by mass, much more preferably 45% by mass or lower, and further preferably 40% by mass or lower relative to the total amount of the resin composition because the resin molded product having excellent smoothness can be obtained even when the relative amount of the thermoplastic resin is decreased due to inclusion of a large amount of the inorganic particles. On the other hand, the content of the thermoplastic resin is preferably 20% by mass or higher, more preferably 25% by mass or higher, and further preferably 30% by mass or higher relative to the total amount of the resin composition because smoothness of the resin molded product is more excellent.

The shape of the pellets is not particularly limited and pellets of, for example, a cylinder shape, a sphere shape, or an ellipsoid sphere shape may be molded. The size of the pellets may be appropriately set depending on the shape. In the case of spherical pellets, for example, the diameter of the pellets may be 1 mm to 10 mm. In the case of elliptical spherical pellets, the pellets may have an elliptical shape with an aspect ratio of 0.1 to 1.0 and a length and a width of 1 mm to 10 mm. In the case of cylindrical pellets, the pellets may have a diameter in the range of 1 mm to 10 mm and a length in the range of 1 mm to 10 mm.

The content of the inorganic particles included in the resin composition constituting the pellets is preferably 40% by mass or higher, more preferably 45% by mass or higher, still more preferably 50% by mass or higher, further preferably 55% by mass or higher, and further more preferably 60% by mass or higher relative to the total amount of the resin composition because the resin molded product having excellent smoothness can be obtained even when a large amount of inorganic particles are included. On the other hand, the resin composition including an adequate but not excessive amount of the inorganic particles can provide a resin molded product having excellent smoothness. Therefore, the content of the inorganic particles is preferably 80% by mass or lower, more preferably 75% by mass or lower, and further preferably 70% by mass or lower relative to the total amount of the resin composition. The content of water in the thermoplastic resin constituting the pellets is low and thus the content of water contained in the pellets is substantially equal to the content of water contained in the inorganic particles.

The average particle diameter of the inorganic particles is not particularly limited and may be, for example, 0.1 µm or larger (for example, 0.2 µm or larger, 0.3 µm or larger, 0.4 µm or larger, 0.5 µm or larger, 0.6 µm or larger, 0.7 µm or larger, 0.8 µm or larger, 0.9 µm or larger, 1.0 µm or larger, 1.2 µm or larger, 1.4 µm or larger, 1.6 µm or larger, 1.8 µm or larger, 2.0 µm or larger, 3.0 µm or larger, 4.0 µm or larger, 5.0 µm or larger, 6.0 µm or larger, 7.0 µm or larger, 8.0 µm or larger, 9.0 µm or larger, 10.0 µm or larger, 15.0 µm or larger, 20.0 µm or larger, 30.0 µm or larger, or 40.0 µm or larger), or 45 µm or smaller (for example, 40.0 µm or smaller, 30.0 µm or smaller, 20.0 µm or smaller, 15.0 µm or smaller, 10.0 µm or smaller, 9.0 µm or smaller, 8.0 µm or smaller, 7.0 µm or smaller, 6.0 µm or smaller, 5.0 µm or smaller, 4.0 µm or smaller, 3.0 µm or smaller, 2.0 µm or smaller, 1.8 µm or smaller, 1.6 µm or smaller, 1.4 µm or smaller, 1.2 µm or smaller, 1.0 µm or smaller, 0.9 µm or smaller, 0.8 µm or smaller, 0.7 µm or smaller, 0.6 µm or smaller, 0.5 µm or smaller, 0.4 µm or smaller, 0.3 µm or smaller, or 0.2 µm or smaller).

In the present invention, the average particle diameter of the inorganic particles is measured with a laser diffraction type particle size distribution measuring apparatus.

The types of the inorganic particles included in the resin composition are not particularly limited and examples of the inorganic particles include calcium carbonate, titanium oxide, silica, clay, talc, kaolin, aluminum hydroxide, calcium sulfate, barium sulfate, mica, zinc oxide, dolomite, glass fiber, and hollow glass. Of these inorganic particles, calcium carbonate is preferably used. These inorganic particles may be used singly or in combination of two or more of the inorganic particles. In order to increase the dispersibility of the inorganic particles in the resin composition, the surface of the inorganic particles may be previously modified by a conventional method.

In addition to the above-described inorganic particles and thermoplastic resin, for example, a foaming agent, a coloring agent, a lubricant, a coupling agent, a fluidity improving material, a dispersing agent, an antioxidant, an ultraviolet absorber, a stabilizer, and an antistatic agent may be blended in the above-described resin composition constituting the pellets.

The molding step according to the present invention can be carried out by conventional molding methods and can be carried out by, for example, extrusion molding (including profile extrusion molding), injection molding, vacuum molding, or blow molding.

The obtained resin molded product has excellent smoothness as described above. Therefore, the resin molded product according to the represent invention is suitable for application of a thick resin molded product. For example, the resin molded product according to the represent invention is suitable for a molded product having a minimum thickness (a thickness of a thinnest part in the resin molded product) of the resin molded product of 2 mm or larger (3 mm or larger, 4 mm or larger, 5 mm or larger, 10 mm or larger, or 50 mm or larger).

### (Pellet preparation step)

The present invention may further include a step of preparing pellets to be molded in the molding step.

The pellets are prepared so that the pellets described in the above molding step are prepared, that is, so that the content of water contained in the pellets is finally 0.55% by mass or lower relative to the mass of the inorganic particles included in the pellets.

For example, pellets can be prepared by kneading and melting the thermoplastic resin, the inorganic particles, and the optional components to prepare a resin composition and cooling the resin composition. In these processes, particularly in the process of cooling the resin composition, the inorganic particles absorb much water. Therefore, the content of water in the inorganic particles in the pellets can be controlled downward by, for example, drying after the cooling step after the preparation of the resin composition. Specifically, cooling after melting by water cooling results in particularly much water absorbed into the inorganic particles in the pellets. Therefore, longer drying time is required. Cooling after melting by air cooling also results in absorbing moisture in air into the inorganic particles in the pellets. Therefore, drying may be required in some cases. The time and temperature of drying can be appropriately set depending on the content of water in the inorganic particles in the pellets before drying.

The thermoplastic resin, the inorganic particles, and the optional components can be kneaded and melted in accordance with conventional methods.

### (Applications)

The applications of the resin molded product produced by the method according to the present invention are particularly suitable for applications that require smoothness. Specifically, the resin molded product is suitable for building materials (for example, a floor, a pillar, a wood deck, and a bench) and the like.

Instead of the above-described method for producing the resin molded product, the method for producing the resin molded product according to the present invention may include a method for producing the resin molded product including a molding step of molding the pellets of the resin composition including the thermoplastic resin and the inorganic particles, and a step of drying the pellets before the molding step of molding the resin molded product, in which the content of the inorganic particles included in the resin composition is 30% by mass or higher relative to the total amount of the resin composition. In the production method, the molding step may be the same as the molding step of molding the resin molded product described above. The step of drying the pellets is a step carried out for controlling the content of water in the inorganic particles in the pellets downward. The drying time and temperature can be appropriately set depending on the content of water in the pellets before drying.

### <Method for producing pellets for resin molding>

The present invention provides a method for producing pellets for resin molding, the method including the steps of: preparing the pellets of the resin composition including the thermoplastic resin and the inorganic particles; and controlling the content of water contained in the pellets to 0.55% by mass or lower relative to the mass of the inorganic particles included in the pellets, in which the content of the inorganic particles included in the resin composition is 30% by mass or higher relative to the total amount of the resin composition.

The step of preparing the pellets of the resin composition can be carried out by the same method as the pellet preparation step in the above-mentioned method for producing the resin molded product according to the present invention. As described above, in the control of the content of water in the inorganic particles in the pellets, the drying time and temperature can be appropriately set depending on the content of water in the inorganic particles in the pellets before drying. The pellets for resin molding are particularly suitable for pellets for resin molding (for example, pellets for resin molding for building materials) for which smoothness is required.

The present invention provides pellets of the resin composition including the thermoplastic resin and the inorganic particles described above, in which the content of water contained in the pellets is 0.55% by mass or lower relative to the mass of the inorganic particles included in the pellets, and the content of the inorganic particles in the resin composition is 30% by mass or higher relative to the total amount of the resin composition. The pellets can be used for resin molding and are particularly suitable for a resin molded product (for example, resin molding product for building materials) for which smoothness is required.

### <Method for improving smoothness>

The present invention provides a method for improving smoothness of the surface of the resin molded product, the method including the steps of: controlling the content of water contained in the pellets of the resin composition including the thermoplastic resin and the inorganic particles to 0.55% by mass or lower relative to the mass of the inorganic particles; and molding the pellets after controlling. In the present invention, the same pellets, water content control, molding, and the like as described above can be used.

### Examples

### <Method for producing resin molded product>

### (Example 1)

At 190°C (measured value of resin temperature: 220°C to 230°C) with a co-rotating twin-screw kneading extruder (HK-25D, screw diameter 25 mm, L/D = 41 (manufactured by Parker Corporation)), 40 parts by weight of polypropylene (EA9, manufactured by Japan Polypropylene Corporation), 60 parts by weight of calcium carbonate (Lyton S4, manufactured by SHIRAISHI CALCIUM KAISHA, LTD.), and 0.5 part by weight of a lubricant (magnesium stearate) in a mass ratio were kneaded, and cooled by water cooling and air cooling (using a belt conveyor), followed by drying to prepare cylindrical pellets having a diameter of 2 mm and a length of 4 mm. The obtained pellets were dried under conditions at 110°C for 12 hours using an air dryer NDO-420 manufactured by Tokyo Rikakikai Co., Ltd.

The obtained pellets were measured with an infrared moisture meter (FD-660 (manufactured by Kett Electric Laboratory) under an atmosphere at a humidity of 50% and a temperature of 23°C. The amount of water was determined by evaporating the water at 105°C and calculating the amount from the mass change before and after the evaporation. The value of the amount of water at the time of equilibrium was defined as the content of water. The sample amount of the pellets to be used was in the range of 5 g to 10 g. As a result of the measurement in the pellets in Example 1, the content of water relative to the total mass of polypropylene and calcium carbonate was 0.22% and the content of water relative to the mass of the inorganic particles contained in the pellets was 0.37%.

The obtained pellets were extruded with a LABO PLASTOMILL extruder (manufactured by Toyo Seiki Seisaku-sho, Ltd., screw diameter 20 mm, L/D = 25) to mold a sheet-like resin molded product according to Example 1 having a thickness of 5 mm.

### (Example 2)

The preparation of pellets, measurement of the content of water in the pellets, and molding of the pellets were carried out in the same conditions as the conditions in Example 1 except that the mass ratio of polypropylene and calcium carbonate in Example 1 was changed to 30 parts by mass/70 parts by mass. The sheet-like resin molded product according to Example 2 having a thickness of 5 mm was prepared. In the pellets in Example 2, the content of water relative to the total mass of polypropylene and calcium carbonate was 0.26% and the content of water relative to the mass of the inorganic particles contained in the pellets was 0.37%.

### (Comparative Example 1)

The preparation of pellets, measurement of the content of water in the pellets, and molding of the pellets were carried out in the same conditions as the conditions in Example 1 except that the pellets were not dried in Example 1. The resin molded product according to Comparative Example 1 having a thickness of 5 mm was prepared. In the pellets in Comparative Example 1, the content of water relative to the total mass of polypropylene and calcium carbonate was 0.40% and the content of water relative to the mass of the inorganic particles contained in the pellets was 0.67%.

### (Comparative Example 2)

The preparation of pellets, measurement of the content of water in the pellets, and molding of the pellets were carried out in the same conditions as the conditions in Example 2 except that the pellets were not dried in Example 2. The resin molded product according to Comparative Example 2 having a thickness of 5 mm was prepared. In the pellets in Comparative Example 2, the content of water relative to the total mass of polypropylene and calcium carbonate was 0.42% and the content of water relative to the mass of the inorganic particles contained in the pellets was 0.60%.

### <Evaluation of smoothness>

The smoothness of the molded products according to Examples 1 and 2 and Comparative Examples 1 and 2 was evaluated. The results are listed in Table 1. In Table 1, "○" means that unevenness of the surface is not observed and thus the resin molded product has excellent smoothness, whereas "×" means that many wrinkles having a depth of 300 microns exist along the flow direction.

**[Table 1]**

| | Evaluation of smoothness |
|---|---|
| Example 1 | ○ |
| Example 2 | ○ |
| Comparative Example 1 | × |
| Comparative Example 2 | × |

As listed in Table 1, the observations in Examples 1 and 2 confirm that the resin molded products have excellent smoothness, whereas the observations in Comparative Examples 1 and 2 confirm that the resin molded products have many wrinkles having a depth of 300 microns along the flow direction and thus do not have excellent smoothness.

## Claims

1. A method for producing a resin molded product, the method comprising:
a molding step of molding pellets of a resin composition comprising a thermoplastic resin and inorganic particles,
wherein a content of water contained in the pellets is 0.55% by mass or lower relative to the mass of the inorganic particles included in the pellets; and
a content of the inorganic particles included in the resin composition is 30% by mass or higher relative to the total amount of the resin composition.

2. The method for producing the resin molded product according to claim 1, wherein the thermoplastic resin comprises a polyolefin resin.

3. The method for producing the resin molded product according to claim 2, wherein the polyolefin resin comprises polypropylene or polyethylene.

4. The method for producing the resin molded product according to any one of claims 1 to 3, wherein the inorganic particles comprise calcium carbonate particles.

5. The method for producing the resin molded product according to any one of claims 1 to 4, wherein the content of water contained in the pellets immediately before molding in the molding step is 0.55% by mass or lower relative to the mass of the inorganic particles included in the pellets.

6. A method for producing pellets for resin molding, the method comprising:
a step of preparing pellets of a resin composition comprising a thermoplastic resin and inorganic particles; and
a step of controlling a content of water contained in the pellets to 0.55% by mass or lower relative to the mass of the inorganic particles included in the pellets,
wherein a content of the inorganic particles included in the resin composition is 30% by mass or higher relative to the total amount of the resin composition.

7. A method for improving smoothness of a surface of a resin molded product, the method comprising:
a step of controlling a content of water contained in pellets of a resin composition comprising a thermoplastic resin and inorganic particles to 0.55% by mass or lower relative to the mass of the inorganic particles; and
a step of molding the pellets after the controlling.
